# EUROPÄISCHE PATENTANMELDUNG

(11) **EP 4 509 815 A1**
(43) Veröffentlichungstag der Anmeldung: **19.02.2025**
(21) Anmeldenummer: 24188946.8
(22) Anmeldetag: 16.07.2024
(51) Int. Cl.: G01M 17/08, G01M 17/10

(54) **VERFAHREN UND SYSTEM ZUR DIAGNOSE UND/ODER ÜBERWACHUNG FÜR SCHIENENFAHRZEUGE**

(30) Priorität: 17.08.2023 AT 506582023
(71) Anmelder: Siemens Mobility Austria GmbH, 1210 Wien (AT)
(72) Erfinder: Kothgasser, Johann, 8020 Graz (AT); Lehner, Sophia, 8020 Graz (AT)
(74) Vertreter: Siemens Patent Attorneys

(57) **Zusammenfassung**

Die Erfindung betrifft ein Verfahren zur Diagnose und/oder Überwachung für Schienenfahrzeuge, insbesondere für Fahrwerke von Schienenfahrzeugen, wobei während eines Betriebs eines Schienenfahrzeugs (3) Betriebsdaten des Schienenfahrzeugs (3), welche zumindest kinematische Daten des
Schienenfahrzeugs (3) umfassen, erfasst werden.

Es wird vorgeschlagen, dass Belastungsdaten betreffend zumindest eine erste Komponente (1) des Schienenfahrzeugs (3), welche zumindest von einem kinematischen Zustand des Schienenfahrzeugs (3) abhängig sind, zumindest einem von dem Schienenfahrzeug (3) benutzbaren ersten Streckenabschnitt (13), welcher über Streckendaten erfasst ist, zugeordnet werden, wobei die Betriebsdaten und die Belastungsdaten einander streckenabschnittsspezifisch zugeordnet werden, und wobei aus den Betriebsdaten, den Belastungsdaten und den Streckendaten zumindest ein Abnutzungszustand der zumindest ersten Komponente (1), zumindest ein Schädigungszustand der zumindest ersten Komponente (1) und/oder eine Lebensdauer der zumindest ersten Komponente (1) ermittelt werden/wird.

Dadurch wird eine streckenabschnittsspezifische Diagnose und/oder Überwachung ermöglicht.

## Beschreibung

Die Erfindung betrifft ein Verfahren zur Diagnose und/oder Überwachung für Schienenfahrzeuge, insbesondere für Fahrwerke von Schienenfahrzeugen, wobei während eines Betriebs eines Schienenfahrzeugs mittels zumindest einer Erfassungseinrichtung Betriebsdaten des Schienenfahrzeugs, welche zumindest kinematische Daten des Schienenfahrzeugs umfassen, erfasst werden.

Diagnose- und/oder Überwachungsverfahren haben auf dem Gebiet der Schienenfahrzeugtechnik einen hohen Stellenwert erlangt. Um ein Verschleißverhalten, ein Schädigungsverhalten und/oder Lebensdauern von Schienenfahrzeugkomponenten möglichst genau detektieren, klassifizieren und/oder prognostizieren zu können, besteht häufig ein Bedarf an einer möglichst genauen Erfassung und/oder Ermittlung von Belastungen, welche während eines Betriebs eines Schienenfahrzeugs auf die Schienenfahrzeugkomponenten wirken. Oft ist es auch erforderlich, Belastungen in Verbindung mit Orten ihres Auftretens zu bringen.

Diese möglichst genaue Erfassung und/oder Ermittlung von Belastungen kann eine umfangreiche Ausstattung von Schienenfahrzeugen mit Messvorrichtungen und/oder eine große Rechnerkapazität erfordern.

Aus dem Stand der Technik ist beispielsweise die WO 2019/219756 A1 bekannt, welche ein Verfahren und eine Vorrichtung zur Diagnose und Überwachung von Fahrzeugen, Fahrzeugkomponenten, Fahrwegen und Fahrwegkomponenten beschreibt. Signale aus Sensormessungen werden an eine Recheneinheit übertragen. Aus einer statistischen Klassifikation oder einer Prädiktion auf Basis der verarbeiteten Signale wird ein technischer Zustandsindikator gebildet, wozu beispielsweise eine Methode maschinellen Lernens eingesetzt sein kann.

Ferner zeigt die WO 2016/119929 A1 ein Verfahren zur Verschleißprognose bei Bremsbelägen von Schienenfahrzeugen. Mittels Testfahrten wird ein Funktionszusammenhang zwischen einer Verschleißrate und Verschleißeinflussfaktoren wie einer Gleitgeschwindigkeit und einem Anpressdruck etc. parametrisiert, indem Materialexponenten der Verschleißeinflussfaktoren ermittelt werden. Während eines Betriebs eines Schienenfahrzeugs werden dann mittels des parametrisierten Funktionszusammenhangs Verschleißraten und ein Verschleiß eines Bremsbelags ermittelt. Auf Grundlage eines Verschleiß-Maximalwerts, einer mittleren Verschleißrate sowie des Verschleißes wird eine verbleibende Lebensdauer des Bremsbelags als verbleibende Bremsdauer bis zu einem Belagtausch bestimmt.

Der Erfindung liegt die Aufgabe zugrunde, ein gegenüber dem Stand der Technik weiterentwickeltes Verfahren anzugeben, mit welchem eine ortsspezifische Diagnose und/oder Überwachung möglich ist.

Erfindungsgemäß wird diese Aufgabe gelöst mit einem Verfahren nach Anspruch 1, bei dem mittels zumindest einer Recheneinrichtung Belastungsdaten betreffend zumindest eine erste Komponente des Schienenfahrzeugs, welche zumindest von einem kinematischen Zustand des Schienenfahrzeugs abhängig sind, zumindest einem von dem Schienenfahrzeug benutzbaren ersten Streckenabschnitt, welcher in der zumindest einen Recheneinrichtung über Streckendaten erfasst ist, zugeordnet werden, wobei mittels der zumindest einen Recheneinrichtung die Betriebsdaten und die Belastungsdaten einander streckenabschnittsspezifisch zugeordnet werden, und wobei mittels der zumindest einen Recheneinrichtung aus den Betriebsdaten, den Belastungsdaten und den Streckendaten zumindest ein Abnutzungszustand der zumindest ersten Komponente, zumindest ein Schädigungszustand der zumindest ersten Komponente und/oder eine Lebensdauer der zumindest ersten Komponente ermittelt werden/wird.

Durch Zuordnung der Belastungsdaten zu dem ersten Streckenabschnitt oder zu einer Mehrzahl von Streckenabschnitten wird ein streckenabschnittsorientiertes Belastungskollektiv gebildet. Dadurch können beispielsweise einzelne Belastungsdatensätze mit einzelnen Streckenabschnitten verknüpft werden. Befährt das Schienenfahrzeug z.B. den ersten Streckenabschnitt, kann zur Ermittlung des Abnutzungszustands der ersten Komponente, des Schädigungszustands der ersten Komponente und/oder der Lebensdauer der ersten Komponente ein erster Belastungsdatensatz eingesetzt werden, welcher dem ersten Streckenabschnitt zugeordnet ist, d.h. welcher eine streckenabschnittsspezifische Belastungscharakteristik (z.B. bedingt durch eine streckenabschnittsspezifische Anzahl von Gleisbögen etc.) der ersten Komponente repräsentiert.

Die Belastungsdaten können beispielsweise vorab gebildet werden und nach deren Bildung aktualisiert werden. Permanente Messvorgänge an dem Schienenfahrzeug, für welche beispielsweise Messvorrichtungen für aufwendige Messungen permanent mit dem Schienenfahrzeug verbunden sind, können so vermieden werden.

Die Betriebsdaten umfassen kinematische Daten, wobei es sich z.B. um Positionsdaten und/oder Geschwindigkeitsdaten betreffend das Schienenfahrzeug etc. handeln kann.

Die Belastungsdaten sind von einem kinematischen Zustand des Schienenfahrzeugs abhängig, wobei der kinematische Zustand beispielsweise eine Position und/oder eine Geschwindigkeit des Schienenfahrzeugs etc. sein kann.

Der erste Streckenabschnitt kann beispielsweise durch eine Startposition des Schienenfahrzeugs an einer ersten Haltestelle und eine Endposition des Schienenfahrzeugs an einer zweiten Haltestelle oder durch die Startposition des Schienenfahrzeugs an der ersten Haltestelle und eine Abschnittslänge etc. definiert sein.

Die erste Komponente des Schienenfahrzeugs kann z.B. eine Fahrwerkskomponente (beispielsweise ein Bremsbelag, eine Feder, ein Fahrwerksrahmen etc.) sein. Mittels des Verfahrens kann eine Diagnose und/oder Überwachung z.B. auch an einer Mehrzahl an Komponenten vorgenommen werden etc.

Durch das Verfahren kann ein digitaler Zwilling der ersten Komponente geschaffen werden, welcher Belastungen aus dem Betrieb des Schienenfahrzeugs abbildet und dadurch eine realistische Abnutzung-, Schädigungs- und/oder Lebensdauerbewertung erlaubt.

Weitere vorteilhafte Ausgestaltungen des erfindungsgemäßen Verfahrens ergeben sich aus den Unteransprüchen.

Günstig ist es beispielsweise, wenn die Belastungsdaten eine Mehrzahl an Belastungsdatensätzen umfassen, wobei jeder Belastungsdatensatz der Belastungsdaten einem Streckenabschnitt einer Mehrzahl an Streckenabschnitten zugeordnet wird, wobei ein erster Belastungsdatensatz der Belastungsdaten dem ersten Streckenabschnitt zugeordnet wird, und wobei einer ersten Zuordnung zwischen dem ersten Belastungsdatensatz und dem ersten Streckenabschnitt eine erste Belastungs-Streckenabschnittskennung zugeordnet wird. Durch diese Maßnahme werden ein rasches Auffinden des ersten Belastungsdatensatzes und ein rascher Zugriff auf den ersten Belastungsdatensatz mittels der Recheneinrichtung ermöglicht, wenn dieser beispielsweise zur Abnutzungs-, Schädigungs- und/oder Lebensdauerermittlung für die erste Komponente bei einer Fahrt des Schienenfahrzeugs über den ersten Streckenabschnitt eingesetzt werden soll.

Eine effiziente, rechnergestützte Handhabung der Belastungsdaten wird erreicht, wenn die Belastungsdaten in einer Datenbank der zumindest einen Recheneinrichtung gespeichert werden und ein dem ersten Streckenabschnitt zugeordneter erster Belastungsdatensatz der Belastungsdaten dann aus der Datenbank aufgerufen wird, wenn das Schienenfahrzeug den ersten Streckenabschnitt befährt. Hilfreich ist es ferner, wenn die Belastungsdaten Daten betreffend Beschleunigungen, Kräfte und/oder Drehmomente umfassen.

Aus den Beschleunigungen können beispielsweise mittels Multiplikation mit Massen Kräfte ermittelt werden etc. Durch diese Maßnahme kann beispielsweise durch Vergleich der Beschleunigungen, Kräfte und/oder Drehmomente mit damit korrespondierenden Grenzwerten auf ein Schadensereignis an der ersten Komponente geschlossen werden etc. Von einer verstärkten Abnutzung und einer Lebensdauerreduktion der ersten Komponente kann beispielsweise ausgegangen werden, wenn ein erhöhtes Beschleunigungs-, Kraft-, und/oder Drehmomentniveau über eine längere Zeit auf die erste Komponente einwirkt oder eine Lastwechselzahl ein definiertes Ausmaß überschreitet etc.

Eine günstige Lösung wird erzielt, wenn die Belastungsdaten Daten betreffend Verformungen, Verschiebungen und/oder Verdrehungen umfassen.

Aus den Verformungen kann beispielsweise auf Materialbeanspruchungen der ersten Komponente geschlossen werden. Beispielsweise kann aus einer Dehnung der ersten Komponente und einem Elastizitätsmodul eines Materials der ersten Komponente eine mechanische Spannung in der ersten Komponente ermittelt werden. Die Verschiebungen können beispielsweise Auslenkungen einer Feder sein, aus welchen z.B. mittels einer Federsteifigkeit Federkräfte bestimmt werden können etc.

Die Verdrehungen können z.B. als Drehwinkel angegeben sein, aus welchen mittels einer Länge der ersten Komponente, einem Schubmodul des Materials der ersten Komponente und einem polaren Flächenträgheitsmoment der ersten Komponente Torsionsmomente ermittelt werden können etc.

Messvorgänge an dem Schienenfahrzeug können vermieden oder in ihrem Umfang reduziert werden, wenn die Belastungsdaten mittels mechanischer Simulation oder thermomechanischer Simulation gebildet werden.

Als mechanische Simulation ist beispielsweise eine Mehrkörpersimulation, eine Finite-Elemente-Methode oder eine numerische Analyse denkbar. Ferner ist als thermomechanische Simulation z.B. eine thermische Finite-Elemente-Analyse vorstellbar.

Eine Steigerung eines Realitätsbezugs der Belastungsdaten kann bewirkt werden, wenn die Belastungsdaten mittels Messungen gebildet werden.

Beispielsweise können die Messungen während verpflichtenden Zulassungsfahrten des Schienenfahrzeugs oder an einem Referenz-Schienenfahrzeug durchgeführt werden etc. Es ist auch möglich, die mittels mechanischer Simulation oder thermomechanischer Simulation gebildeten Belastungsdaten mittels Messungen zu präzisieren etc.

Eine Diagnose und/oder Überwachung der ersten Komponente unter Berücksichtigung von Beladungszuständen des Schienenfahrzeugs kann vorgenommen werden, wenn die Betriebsdaten Beladungsdaten betreffend das Schienenfahrzeug umfassen und die Belastungsdaten abhängig von einem Beladungszustand des Schienenfahrzeugs sind.

Eine günstige Lösung erhält man, wenn die Betriebsdaten Umgebungstemperaturdaten betreffend eine Umgebung des Schienenfahrzeugs umfassen und die Belastungsdaten abhängig von einem Umgebungstemperaturzustand in der Umgebung des Schienenfahrzeugs sind.

Durch diese Maßnahme wird eine umgebungstemperaturabhängige Diagnose und/oder Überwachung der ersten Komponente ermöglicht. Beispielsweise kann eine Berücksichtigung des Umgebungstemperaturzustands bei einer Diagnose und/oder Überwachung von Elastomerfedern, Bremsbelägen oder Bremsscheiben etc. sinnvoll sein, da auf deren Zustand und Lebensdauer Temperaturen und/oder Temperaturunterschiede einen Einfluss haben können.

Eine Berücksichtigung definierter Betriebsszenarien bei Diagnose- und/oder Überwachungsvorgängen an der ersten Komponente wird ermöglicht, wenn die Betriebsdaten Daten betreffend Betriebsszenarien, insbesondere Daten betreffend Bremsmanöver, umfassen und die Belastungsdaten abhängig von einem Betriebszustand des Schienenfahrzeugs sind.

Ein definiertes Betriebsszenario kann beispielsweise eine Schnellbremsung des Schienenfahrzeugs sein. Übersteigt beispielsweise eine Anzahl an Schnellbremsungen je Zeiteinheit einen definierten Schwellwert, so kann in dem erfindungsgemäßen Verfahren z.B. von einer überproportionalen Abnutzung von Bremsbelägen des Schienenfahrzeugs ausgegangen werden etc.

Eine Diagnose und/oder Überwachung unter Berücksichtigung einer Zugkonfiguration des Schienenfahrzeugs wird ermöglicht, wenn die Betriebsdaten Zugkonfigurationsdaten betreffend das Schienenfahrzeug umfassen und die Belastungsdaten abhängig von einer Zugkonfiguration des Schienenfahrzeugs sind.

Die Zugkonfiguration kann beispielsweise durch eine Zusammenstellung von Wagen des Schienenfahrzeugs definiert sein, wobei die Wagen teilweise unterschiedliche Bremseinrichtungen mit unterschiedlichen Konstruktions- und/oder Leistungscharakteristiken aufweisen können etc. Je nach Konstruktions- und/oder Leistungscharakteristik einer Bremseinrichtung können beispielsweise unterschiedliche Belastungsgrenzwerte der Bremseinrichtung definiert sein und können sich Belastungen unterschiedlich auf ein Abnutzungsverhalten, ein Schädigungsverhalten und/oder eine Lebensdauer einer Bremskomponente der Bremseinrichtung auswirken etc.

Sollen Überwachungs- und/oder Diagnosevorgänge unter Berücksichtigung einer Gleisgeometrie und/oder eines Gleiszustands durchgeführt werden, so kann es empfehlenswert sein, wenn die Streckendaten Gleisgeometriedaten und/oder Gleiszustandsdaten umfassen und die Belastungsdaten abhängig von einer Gleisgeometrie und/oder einem Gleiszustand sind. Die Gleisgeometriedaten können beispielsweise Werte von Gleisbogenradien oder eine Anzahl an Gleisbögen in dem ersten Streckenabschnitt etc. repräsentieren. Die Gleiszustandsdaten können z.B. einen Gleislagefehler in dem ersten Streckenabschnitt charakterisieren etc. Eine hohe Anzahl an Gleisbögen in dem ersten Streckenabschnitt kann beispielsweise zu einem gehäuften Auftreten von Querbeschleunigungsvorgängen des Schienenfahrzeugs und zu einer erhöhten Belastung des Schienenfahrzeugs führen. Ein Auftreten von Gleislagefehlern kann zu stoßartigen Belastungen des Schienenfahrzeugs führen.

In Lastkollektiven kann z.B. ein gehäuftes Auftreten von Querbeschleunigungsvorgängen des Schienenfahrzeugs oder können stoßartige Belastungen des Schienenfahrzeugs abgebildet sein. Die Belastungsdaten können derartige Lastkollektive repräsentieren, wodurch eine Abhängigkeit der Belastungsdaten von einer Gleisgeometrie und/oder einem Gleiszustand realisiert ist.

Günstig kann es weiterhin sein, wenn die Streckendaten Streckenhöchstgeschwindigkeitsdaten umfassen.

Durch diese Maßnahme können beispielsweise Belastungen, welche auf die erste Komponente wirken, in Relation zu einer Streckenhöchstgeschwindigkeit in dem ersten Streckenabschnitt gesetzt werden.

Eine gleisabhängige Diagnose und/oder Überwachung wird ermöglicht, wenn die Streckendaten Gleiskennungsdaten umfassen und die Belastungsdaten gleisabhängig sind.

Dadurch können beispielsweise für unterschiedliche Richtungsgleise einer Strecke unterschiedliche Lastkollektive angesetzt werden. Unterschiedliche Lastkollektive können z.B. dann angesetzt werden, wenn ein erstes Richtungsgleis der Strecke einen in den Belastungsdaten erfassten Gleislagefehler aufweist, während ein zweites Richtungsgleis der Strecke keinen Gleislagefehler aufweist, etc. Weiterhin kann durch diese Maßnahme eine fahrtrichtungsabhängige Diagnose und/oder Überwachung realisiert werden.

Ein erfolgversprechendes Anwendungsgebiet für das erfindungsgemäße Verfahren kann mit einem System zur Diagnose und/oder Überwachung für Schienenfahrzeuge, insbesondere für Fahrwerke von Schienenfahrzeugen, welches Mittel zur Ausführung des erfindungsgemäßen Verfahrens umfasst, erschlossen werden, wobei die Mittel zumindest eine Erfassungseinrichtung sowie zumindest eine Recheneinrichtung aufweisen, wobei die zumindest eine Erfassungseinrichtung dazu konfiguriert ist, während eines Betriebs eines Schienenfahrzeugs Betriebsdaten des Schienenfahrzeugs, welche zumindest kinematische Daten des Schienenfahrzeugs umfassen, zu erfassen und wobei die zumindest eine Recheneinrichtung dazu konfiguriert ist, Belastungsdaten betreffend zumindest eine erste Komponente des Schienenfahrzeugs, welche zumindest von einem kinematischen Zustand des Schienenfahrzeugs abhängig sind, zumindest einem von dem Schienenfahrzeug benutzbaren ersten Streckenabschnitt, welcher in der zumindest einen Recheneinrichtung über Streckendaten erfasst ist, zuzuordnen, die Betriebsdaten und die Belastungsdaten einander streckenabschnittsspezifisch zuzuordnen und aus den Betriebsdaten, den Belastungsdaten und den Streckendaten zumindest einen Abnutzungszustand der zumindest ersten Komponente, zumindest einen Schädigungszustand der zumindest ersten Komponente und/oder eine Lebensdauer der zumindest ersten Komponente zu ermitteln.

Das System kann beispielweise in dem Schienenfahrzeug angeordnet sein, wodurch ein bordeigenes Diagnose- und/oder Überwachungssystem realisiert wird. Es ist aber auch möglich, das System beispielsweise teilweise in einer Streckenzentrale eines Bahnbetriebs anzuordnen, welche mit einer Flotte an Schienenfahrzeugen signalübertragend verbunden ist. Erfasste Betriebsdaten der Schienenfahrzeuge können so von den Schienenfahrzeugen an die Recheneinrichtung, welche in der Bahnstreckenzentrale angeordnet ist, übertragen werden, um mittels der Recheneinrichtung, in welcher die Belastungsdaten und die Streckendaten gespeichert sein können, ausgewertet zu werden. Dadurch wird eine flottenorientierte Auswertung ermöglicht.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen Verfahrens zur Diagnose und/oder Überwachung für Schienenfahrzeuge, und
- Fig. 2:: Einen schematischen Seitenriss einer beispielhaften Ausführungsvariante eines erfindungsgemäßen Systems zur Diagnose und/oder Überwachung für Schienenfahrzeuge, wobei das System in einem Schienenfahrzeug angeordnet ist.

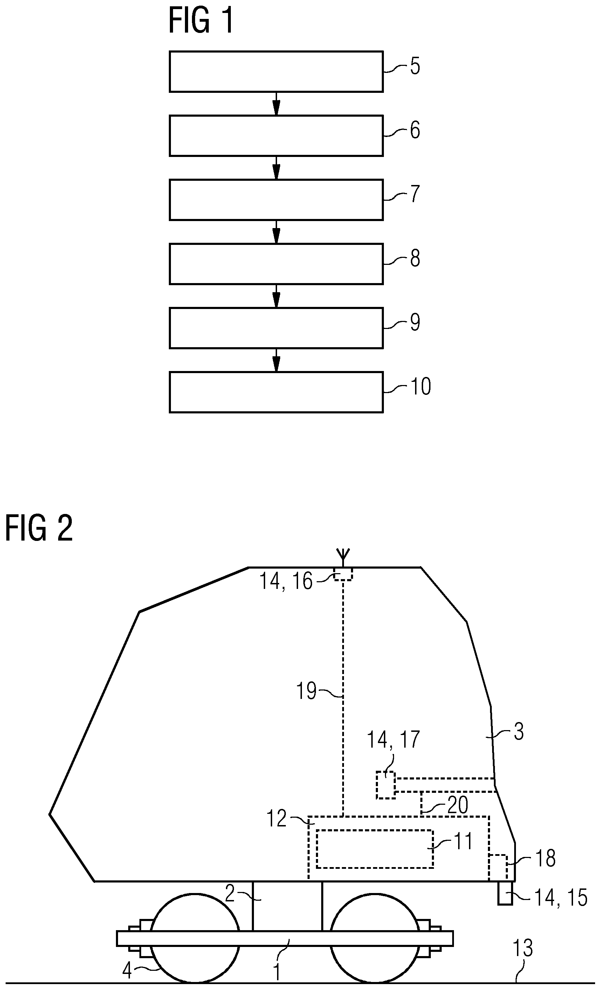

Fig. 1 zeigt ein Flussdiagramm zu einer beispielhaften Ausführungsvariante eines erfindungsgemäßen Verfahrens zur Diagnose und Überwachung für Schienenfahrzeuge.

Mittels des Verfahrens werden eine Diagnose und eine Überwachung an einer ersten Komponente 1 eines Schienenfahrzeugs 3, wie es beispielhaft in Fig. 2 gezeigt ist, und an einer zweiten Komponente 2 des Schienenfahrzeugs 3 vorgenommen.

Die erste Komponente 1 ist als Fahrwerksrahmen eines Fahrwerks 4 des Schienenfahrzeugs 3 ausgebildet, die zweite Komponente 2 als Sekundärfeder des Schienenfahrzeugs 3.

In einem ersten Verfahrensschritt 5 wird ein Streckennetz eines Bahnbetriebs sequenziert, d.h. in von dem Schienenfahrzeug 3 benutzbare Streckenabschnitte unterteilt. Die Streckenabschnitte werden über Startpositionen und Endpositionen zwischen Haltestellen definiert. Die Startpositionen und Endpositionen werden als Streckendaten in einer Datenbank 11 einer Recheneinrichtung 12 einer beispielhaften Ausführungsvariante eines erfindungsgemäßen Systems zur Diagnose und Überwachung für Schienenfahrzeuge, welches in und an dem Schienenfahrzeug 3 angeordnet und in Fig. 2 gezeigt ist, erfasst und gespeichert.

Ein erster Streckenabschnitt 13, wie er beispielhaft in Fig. 2 offenbart ist, weist eine erste Startposition an einer ersten Haltestelle und eine erste Endposition an einer zweiten Haltestelle auf.

Die Streckendaten umfassen weiterhin Gleisgeometriedaten, Gleiszustandsdaten, Streckenhöchstgeschwindigkeitsdaten sowie Gleiskennungsdaten.

In den Gleisgeometriedaten sind Positionen von Gleisbögen sowie entsprechende Bogenradien erfasst. In den Gleiszustandsdaten sind Positionen von Gleislagefehlern erfasst.

Die Streckenhöchstgeschwindigkeitsdaten repräsentieren für einzelne Streckenabschnitte maximal zulässige Fahrgeschwindigkeiten.

Über die Gleiskennungsdaten werden Richtungsgleise der Streckenabschnitte identifiziert.

Die Gleisgeometriedaten, die Gleiszustandsdaten, die Streckenhöchstgeschwindigkeitsdaten sowie die Gleiskennungsdaten sind den in den Streckendaten erfassten Streckenabschnitten zugeordnet.

Mittels mechanischer Simulation, thermomechanischer Simulation sowie mittels Messungen werden in einem zweiten Verfahrensschritt 6 Belastungsdaten betreffend die erste Komponente 1 und die zweite Komponente 2 gebildet. Die Belastungsdaten umfassen Daten betreffend Beschleunigungen, Kräfte, Drehmomente, Verformungen, Verschiebungen und Verdrehungen der ersten Komponente 1 und der zweiten Komponente 2.

Als mechanische Simulation wird eine Mehrkörpersimulation eingesetzt, als thermomechanische Simulation eine thermische Finite-Elemente-Methode. Die mechanische Simulation und die thermomechanische Simulation werden mittels eines Rechners außerhalb des Schienenfahrzeugs 3 durchgeführt. Die Messungen werden während Zulassungsfahrten des Schienenfahrzeugs 3 durchgeführt. Durch aus den Messungen resultierende Messergebnisse werden die Belastungsdaten ergänzt und präzisiert.

Erfindungsgemäß ist es auch vorstellbar, auf die Messungen zur Bildung der Belastungsdaten zu verzichten. Erfindungsgemäß ist es ferner möglich, dass mit dem Schienenfahrzeug 3 (z.B. mit Radsatzlagergehäusen des Fahrwerks 4) Beschleunigungssensoren verbunden sind, mit welchen Beschleunigungsdaten erfasst werden, durch welche die Belastungsdaten ergänzt werden, etc.

Die Belastungsdaten werden in der Datenbank 11 gespeichert.

Aus den Belastungsdaten werden in dem zweiten Verfahrensschritt 6 Lastkollektive gebildet, welche in dem Verfahren je nach Lastfall (z.B. in Abhängigkeit einer Beladung oder einer Fahrgeschwindigkeit des Schienenfahrzeugs 3) in dem Verfahren ausgewählt und eingesetzt werden können. Für die erste Komponente 1 wird ein spezifisches erstes Lastkollektiv gebildet, für die zweite Komponente 2 ein spezifisches zweites Lastkollektiv.

Die Belastungsdaten sind abhängig von der Fahrgeschwindigkeit und einer Position des Schienenfahrzeugs 3, d.h. abhängig von einem kinematischen Zustand des Schienenfahrzeugs 3, sowie abhängig von einem Beladungszustand des Schienenfahrzeugs 3, von einem Umgebungstemperaturzustand in der Umgebung des Schienenfahrzeugs 3, von einem Betriebszustand des Schienenfahrzeugs 3, von einer Zugkonfiguration des Schienenfahrzeugs 3, von einer Gleisgeometrie sowie von einem Gleiszustand. Die Belastungsdaten sind ferner gleisabhängig. Eine Fahrgeschwindigkeitsabhängigkeit der Belastungsdaten repräsentiert beispielsweise, dass bei auf die erste Komponente 1 und die zweite Komponente 2 periodisch einwirkenden Kräften eine Frequenz einer Einwirkung dieser Kräfte veränderlich ist (hohe Fahrgeschwindigkeiten bedingen beispielsweise hohe Frequenzen). Eine Positionsabhängigkeit der Belastungsdaten repräsentiert beispielsweise, dass definierte Kräfte und Drehmomente an definierten Orten auf die erste Komponente 1 und die zweite Komponente 2 einwirken. Eine Abhängigkeit der Belastungsdaten von einem Beladungszustand des Schienenfahrzeugs 3 repräsentiert beispielsweise, dass sich vertikale Kräfte auf die erste Komponente 1 und die zweite Komponente 2 mit zunehmender Beladung des Schienenfahrzeugs 3 vergrößern. Eine Umgebungstemperaturabhängigkeit der Belastungsdaten bewirkt beispielsweise, dass in der Diagnose und Überwachung der zweiten Komponente 2 berücksichtigt wird, dass eine definierte Kraft auf die zweite Komponente 2 außerhalb eines definierten Umgebungstemperaturbereichs stärker zu einer Lebensdauerreduktion der zweiten Komponente 2 beiträgt als innerhalb des definierten Umgebungstemperaturbereichs (beispielsweise ist ein Verschleißverhalten eines Elastomer-Luftbalgs der zweiten Komponente 2 temperaturabhängig).

Eine Abhängigkeit der Belastungsdaten von einem Betriebszustand des Schienenfahrzeugs 3 führt beispielsweise dazu, dass in der Diagnose und Überwachung der ersten Komponente 1 berücksichtigt wird, dass z.B. eine gehäufte Anzahl von Schnellbremsungen und eine damit einhergehende gehäufte Einleitung von hohen Bremskräften in die erste Komponente 1 zu einer verstärkten Lebensdauerreduktion der ersten Komponente 1 führt. Eine Zugkonfigurationsabhängigkeit der Belastungsdaten repräsentiert beispielsweise eine von einer Zugzusammenstellung des Schienenfahrzeugs 3 abhängige Leistungscharakteristik eines Bremssystems des Schienenfahrzeugs 3 (z.B. im Hinblick auf eine Höhe und eine Verteilung von Bremskräften etc.).

Eine Gleisgeometrieabhängigkeit der Belastungsdaten repräsentiert beispielsweise in Verbindung mit der Fahrgeschwindigkeitsabhängigkeit der Belastungsdaten, dass in den Gleisbögen, welche in den Streckendaten erfasst sind, Fliehkräfte auf die erste Komponente 1 und die zweite Komponente 2 einwirken, welche mit steigender Fahrgeschwindigkeit ansteigen. Eine Gleiszustandsabhängigkeit der Belastungsdaten repräsentiert beispielsweise in Verbindung mit der Positionsabhängigkeit der Belastungsdaten Stöße von definierter Größe, welche aufgrund von den in den Streckendaten erfassten Gleislagefehlern an definierten Positionen des Schienenfahrzeugs 3 auf die erste Komponente 1 und auf die zweite Komponente 2 einwirken.

Eine Gleisabhängigkeit der Belastungsdaten repräsentiert beispielsweise, dass ein erstes Richtungsgleis des ersten Streckenabschnitts 13 einen anderen Gleiszustand aufweist als ein zweites Richtungsgleis des ersten Streckenabschnitts 13.

Mittels der Recheneinrichtung 12 werden in einem dritten Verfahrensschritt 7 durch Verknüpfung der Belastungsdaten mit den Streckendaten die Belastungsdaten den Streckenabschnitten zugeordnet, d.h. ein erster Belastungsdatensatz mit definierten ersten Lasten aus den gebildeten Lastkollektiven dem ersten Streckenabschnitt 13, ein zweiter Belastungsdatensatz mit definierten zweiten Lasten aus den gebildeten Lastkollektiven einem zweiten Streckenabschnitt usw. Eine derartige Zuordnung ist durch die Positionsabhängigkeit der Belastungsdaten und die Erfassung der Streckenabschnitte über Startpositionen und Endpositionen möglich.

Die Belastungsdaten weisen also eine Mehrzahl an Belastungsdatensätzen auf, wobei jeder Belastungsdatensatz der Belastungsdaten einem Streckenabschnitt einer Mehrzahl an Streckenabschnitten zugeordnet wird, wobei einer ersten Zuordnung zwischen dem ersten Belastungsdatensatz und dem ersten Streckenabschnitt 13 eine erste Belastungs-Streckenabschnittskennung zugeordnet wird und einer zweiten Zuordnung zwischen dem zweiten Belastungsdatensatz und dem zweiten Streckenabschnitt eine zweite Belastungs-Streckenabschnittskennung zugeordnet wird usw.

Die erste Belastungs-Streckenabschnittskennung und die zweite Belastungs-Streckenabschnittskennung sind als Zifferncodes ausgeführt.

In einem vierten Verfahrensschritt 8, welcher während eines Betriebs des Schienenfahrzeugs 3 vorgenommen wird, werden mittels einer Erfassungseinrichtung 14 des Systems zur Diagnose und Überwachung Betriebsdaten des Schienenfahrzeugs 3, welche kinematische Daten des Schienenfahrzeugs 3 umfassen, erfasst. Die Erfassungseinrichtung 14 umfasst einen Radargeschwindigkeitssensor 15 sowie einen Empfänger 16 eines Satellitennavigationssystems. Mittels des Radargeschwindigkeitssensors 15 werden Fahrgeschwindigkeiten des Schienenfahrzeugs 3 gemessen, mittels des Empfängers 16 werden Positionen des Schienenfahrzeugs 3 erfasst. Bei den Fahrgeschwindigkeiten und den Positionen handelt es sich um kinematische Betriebsdaten.

Die Erfassungseinrichtung 14 umfasst ferner einen Zugbus 17, aus welchem in dem vierten Verfahrensschritt 8 Beladungsdaten betreffend das Schienenfahrzeug 3, Umgebungstemperaturdaten betreffend eine Umgebung des Schienenfahrzeugs 3, Daten betreffend ein Auftreten von Betriebsszenarien, in welchen das Schienenfahrzeug 3 Schnellbremsungen ausführt, sowie Zugkonfigurationsdaten betreffend das Schienenfahrzeug 3 ausgelesen werden. Bei den Beladungsdaten, den Umgebungstemperaturdaten, den Daten betreffend ein Auftreten von Betriebsszenarien sowie den Zugkonfigurationsdaten handelt es sich um Betriebsdaten des Schienenfahrzeugs 3, welche mittels Bordsensoren und Bordsystemen des Schienenfahrzeugs 3 erfasst werden. Die Beladungsdaten werden beispielsweise mittels Lastsensoren erfasst, die Umgebungstemperaturdaten mittels Temperatursensoren, die Daten betreffend ein Auftreten von Schnellbremsungen mittels eines Bremssteuergeräts und die Zugkonfigurationsdaten sind in einem zentralen Bordrechner gespeichert.

In einem fünften Verfahrensschritt 9 werden mittels der Recheneinrichtung 12 die Betriebsdaten und die Belastungsdaten einander streckenabschnittsspezifisch zugeordnet. Anhand einer Erfassung einer aktuellen Position des Schienenfahrzeugs 3 mittels des Empfängers 16 und eines Abgleichs der aktuellen Position mit der ersten Startposition und der ersten Endposition des ersten Streckenabschnitts 13 aus den Streckendaten wird beispielsweise festgestellt, dass das Schienenfahrzeug 3 den ersten Streckenabschnitt 13 befährt.

Befährt das Schienenfahrzeug 3 den ersten Streckenabschnitt 13, so wird der dem ersten Streckenabschnitt 13 zugeordnete erste Belastungsdatensatz aus der Datenbank 11 aufgerufen.

Mittels der Recheneinrichtung 12 werden in einem sechsten Verfahrensschritt 10 aus den Betriebsdaten, den Belastungsdaten und den Streckendaten Abnutzungszustände der ersten Komponente 1 und der zweiten Komponente 2, Schädigungszustände der ersten Komponente 1 und der zweiten Komponente 2 sowie Lebensdauern der ersten Komponente 1 und der zweiten Komponente 2 ermittelt.

Anhand einer mittels des Radargeschwindigkeitssensors 15 gemessenen, aktuellen Fahrgeschwindigkeit des Schienenfahrzeugs 3 und anhand einer aus dem Zugbus 17 ausgelesenen, aktuellen Beladung des Schienenfahrzeugs 3 werden beispielsweise jene Belastungsdaten ausgewählt, welche mit der aktuellen Fahrgeschwindigkeit und der aktuellen Beladung korrelieren. Es ist dabei auch möglich, dass zwischen einzelnen Belastungswerten interpoliert wird.

Die Streckendaten werden in Ermittlungsvorgängen der Abnutzungszustände, der Schädigungszustände und der Lebensdauern berücksichtigt, da die Streckendaten und die Belastungsdaten miteinander verknüpft sind.

Belastungsvorgänge werden je Streckenabschnitt summiert, wobei beispielsweise geprüft wird, wie viele Lastwechsel erfolgen und wie hoch eine Anzahl an Schnellbremsungen des Schienenfahrzeugs 3 ist. Je größer eine Lastwechselanzahl und eine Schnellbremsungsanzahl sind, umso größer sind Abnutzungskennwerte sowie Schädigungskennwerte der ersten Komponente 1 und der zweiten Komponente 2 und umso kürzer sind die Lebensdauern der ersten Komponente 1 und der zweiten Komponente 2.

Überschreiten die Abnutzungskennwerte oder die Schädigungskennwerte definierte Grenzwerte oder unterschreiten die Lebensdauern definierte Lebensdauergrenzwerte, so wird auf einer Anzeige in dem Schienenfahrzeug 3 eine Warnung dargestellt.

Die Abnutzungskennwerte und die Schädigungskennwerte werden in Relation zu maximal zulässigen Abnutzungen und Schädigungen gesetzt, welche in der mechanischen Simulation, der thermomechanischen Simulation und den Messungen ermittelt werden. Jeder Lastwechsel und jede Schnellbremsung leisten gewichtete Beiträge zu einer Annäherung an die maximal zulässigen Abnutzungen und Schädigungen.

Erfindungsgemäß ist es auch denkbar, dass zur Ermittlung der Abnutzungszustände, der Schädigungszustände und der Lebensdauern Belastungsdaten durch Streckendaten ersetzt werden, also Streckendaten Belastungsdaten bilden, d.h. dass zum Beispiel die Abnutzungskennwerte, die Schädigungskennwerte und die Lebensdauern anhand einer Anzahl an Gleisbögen in den befahrenen Streckenabschnitten abgeschätzt werden.

Erfindungsgemäß ist es ferner möglich (beispielsweise dann, wenn über den Radargeschwindigkeitssensor 15, den Empfänger 16 und den Zugbus 17 keine Betriebsdaten erfasst werden können), dass die in den Streckendaten erfassten Streckenhöchstgeschwindigkeitsdaten als Betriebsdaten eingesetzt werden und zur Ermittlung der Abnutzungszustände, der Schädigungszustände und der Lebensdauern zu streckenabschnittsspezifischen Streckenhöchstgeschwindigkeiten passende Belastungsdaten ausgewählt werden.

In Fig. 2 ist ein schematischer Seitenriss einer beispielhaften Ausführungsvariante eines erfindungsgemäßen Systems zur Diagnose und Überwachung für Schienenfahrzeuge dargestellt, wobei das System in einem Schienenfahrzeug 3 angeordnet ist.

Mittels des Systems werden Abnutzungszustände, Schädigungszustände und Lebensdauern einer ersten Komponente 1, welche als Fahrwerksrahmen eines Fahrwerks 4 des Schienenfahrzeugs 3 ausgebildet ist, sowie einer zweiten Komponente 2, welche als Luftfeder, die als Sekundärfeder des Schienenfahrzeugs 3 fungiert, ausgebildet ist, gemäß jener beispielhaften Ausführungsvariante eines erfindungsgemäßen Verfahrens, wie sie in Fig. 1 gezeigt ist, ermittelt.

Das System umfasst Mittel zur Ausführung des Verfahrens. Die Mittel weisen eine Erfassungseinrichtung 14 mit einem Radargeschwindigkeitssensor 15, einem Empfänger 16 eines Satellitennavigationssystems und einem Zugbus 17 sowie eine Recheneinrichtung 12 auf und sind in sowie an dem Schienenfahrzeug 3 angeordnet.

Zur Datenübertragung ist der Radargeschwindigkeitssensor 15 über ein erstes Kabel 18 mit der Recheneinrichtung 12 verbunden, ist der Empfänger 16 über ein zweites Kabel 19 mit der Recheneinrichtung 12 verbunden und ist der Zugbus 17 über ein drittes Kabel 20 mit der Recheneinrichtung 12 verbunden.

Die Erfassungseinrichtung 14 ist dazu konfiguriert, während eines Betriebs des Schienenfahrzeugs 3 Betriebsdaten des Schienenfahrzeugs 3, welche, wie im Zusammenhang mit Fig. 1 beispielhaft beschrieben, kinematische Daten des Schienenfahrzeugs 3 sowie weitere Daten umfassen, zu erfassen.

Die Recheneinrichtung 12 ist dazu konfiguriert, in einer Datenbank 11 der Recheneinrichtung 12 gespeicherte Belastungsdaten betreffend die erste Komponente 1 und die zweite Komponente 2, welche, wie im Zusammenhang mit Fig. 1 beispielhaft beschrieben, von einem kinematischen Zustand des Schienenfahrzeugs 3 sowie weiteren Belastungseinflüssen abhängig sind, einem von dem Schienenfahrzeug 3 benutzbaren ersten Streckenabschnitt 13, welcher in der Recheneinrichtung 12 über Streckendaten, welche in der Datenbank 11 gespeichert sind, erfasst ist, zuzuordnen, die Betriebsdaten und die Belastungsdaten einander streckenabschnittsspezifisch zuzuordnen und aus den Betriebsdaten, den Belastungsdaten und den Streckendaten Abnutzungszustände, Schädigungszustände und Lebensdauern der ersten Komponente 1 und der zweiten Komponente 2 zu ermitteln.

### Liste der Bezeichnungen

- 1: Erste Komponente
- 2: Zweite Komponente
- 3: Schienenfahrzeug
- 4: Fahrwerk
- 5: Erster Verfahrensschritt
- 6: Zweiter Verfahrensschritt
- 7: Dritter Verfahrensschritt
- 8: Vierter Verfahrensschritt
- 9: Fünfter Verfahrensschritt
- 10: Sechster Verfahrensschritt
- 11: Datenbank
- 12: Recheneinrichtung
- 13: Erster Streckenabschnitt
- 14: Erfassungseinrichtung
- 15: Radargeschwindigkeitssensor
- 16: Empfänger
- 17: Zugbus
- 18: Erstes Kabel
- 19: Zweites Kabel
- 20: Drittes Kabel

## Patentansprüche

1. Verfahren zur Diagnose und/oder Überwachung für Schienenfahrzeuge, insbesondere für Fahrwerke von Schienenfahrzeugen, wobei während eines Betriebs eines Schienenfahrzeugs (3) mittels zumindest einer Erfassungseinrichtung (14) Betriebsdaten des Schienenfahrzeugs (3), welche zumindest kinematische Daten des Schienenfahrzeugs (3) umfassen, erfasst werden, **dadurch gekennzeichnet, dass** mittels zumindest einer Recheneinrichtung (12) Belastungsdaten betreffend zumindest eine erste Komponente (1) des Schienenfahrzeugs (3), welche zumindest von einem kinematischen Zustand des Schienenfahrzeugs (3) abhängig sind, zumindest einem von dem Schienenfahrzeug (3) benutzbaren ersten Streckenabschnitt (13), welcher in der zumindest einen Recheneinrichtung (12) über Streckendaten erfasst ist, zugeordnet werden, wobei mittels der zumindest einen Recheneinrichtung (12) die Betriebsdaten und die Belastungsdaten einander streckenabschnittsspezifisch zugeordnet werden, und wobei mittels der zumindest einen Recheneinrichtung (12) aus den Betriebsdaten, den Belastungsdaten und den Streckendaten zumindest ein Abnutzungszustand der zumindest ersten Komponente (1), zumindest ein Schädigungszustand der zumindest ersten Komponente (1) und/oder eine Lebensdauer der zumindest ersten Komponente (1) ermittelt werden/wird.

2. Verfahren nach Anspruch 1, **dadurch gekennzeichnet, dass** die Belastungsdaten eine Mehrzahl an Belastungsdatensätzen umfassen, wobei jeder Belastungsdatensatz der Belastungsdaten einem Streckenabschnitt einer Mehrzahl an Streckenabschnitten zugeordnet wird, wobei ein erster Belastungsdatensatz der Belastungsdaten dem ersten Streckenabschnitt (13) zugeordnet wird, und wobei einer ersten Zuordnung zwischen dem ersten Belastungsdatensatz und dem ersten Streckenabschnitt (13) eine erste Belastungs-Streckenabschnittskennung zugeordnet wird.

3. Verfahren nach Anspruch 1 oder 2, **dadurch gekennzeichnet, dass** die Belastungsdaten in einer Datenbank (11) der zumindest einen Recheneinrichtung (12) gespeichert werden und ein dem ersten Streckenabschnitt (13) zugeordneter erster Belastungsdatensatz der Belastungsdaten dann aus der Datenbank (11) aufgerufen wird, wenn das Schienenfahrzeug (3) den ersten Streckenabschnitt (13) befährt.

4. Verfahren nach einem der Ansprüche 1 bis 3, **dadurch gekennzeichnet, dass** die Belastungsdaten Daten betreffend Beschleunigungen, Kräfte und/oder Drehmomente umfassen.

5. Verfahren nach einem der Ansprüche 1 bis 4, **dadurch gekennzeichnet, dass** die Belastungsdaten Daten betreffend Verformungen, Verschiebungen und/oder Verdrehungen umfassen.

6. Verfahren nach einem der Ansprüche 1 bis 5, **dadurch gekennzeichnet, dass** die Belastungsdaten mittels mechanischer Simulation oder thermomechanischer Simulation gebildet werden.

7. Verfahren nach einem der Ansprüche 1 bis 6, **dadurch gekennzeichnet, dass** die Belastungsdaten mittels Messungen gebildet werden.

8. Verfahren nach einem der Ansprüche 1 bis 7, **dadurch gekennzeichnet, dass** die Betriebsdaten Beladungsdaten betreffend das Schienenfahrzeug (3) umfassen und die Belastungsdaten abhängig von einem Beladungszustand des Schienenfahrzeugs (3) sind.

9. Verfahren nach einem der Ansprüche 1 bis 8, **dadurch gekennzeichnet, dass** die Betriebsdaten Umgebungstemperaturdaten betreffend eine Umgebung des Schienenfahrzeugs (3) umfassen und die Belastungsdaten abhängig von einem Umgebungstemperaturzustand in der Umgebung des Schienenfahrzeugs (3) sind.

10. Verfahren nach einem der Ansprüche 1 bis 9, **dadurch gekennzeichnet, dass** die Betriebsdaten Daten betreffend Betriebsszenarien, insbesondere Daten betreffend Bremsmanöver, umfassen und die Belastungsdaten abhängig von einem Betriebszustand des Schienenfahrzeugs (3) sind.

11. Verfahren nach einem der Ansprüche 1 bis 10, **dadurch gekennzeichnet, dass** die Betriebsdaten Zugkonfigurationsdaten betreffend das Schienenfahrzeug (3) umfassen und die Belastungsdaten abhängig von einer Zugkonfiguration des Schienenfahrzeugs (3) sind.

12. Verfahren nach einem der Ansprüche 1 bis 11, **dadurch gekennzeichnet, dass** die Streckendaten Gleisgeometriedaten und/oder Gleiszustandsdaten umfassen und die Belastungsdaten abhängig von einer Gleisgeometrie und/oder einem Gleiszustand sind.

13. Verfahren nach einem der Ansprüche 1 bis 12, **dadurch gekennzeichnet, dass** die Streckendaten Streckenhöchstgeschwindigkeitsdaten umfassen.

14. Verfahren nach einem der Ansprüche 1 bis 13, **dadurch gekennzeichnet, dass** die Streckendaten Gleiskennungsdaten umfassen und die Belastungsdaten gleisabhängig sind.

15. System zur Diagnose und/oder Überwachung für Schienenfahrzeuge, insbesondere für Fahrwerke von Schienenfahrzeugen, welches Mittel zur Ausführung des Verfahrens nach einem der Ansprüche 1 bis 14 umfasst, wobei die Mittel zumindest eine Erfassungseinrichtung (14) sowie zumindest eine Recheneinrichtung (12) aufweisen, **dadurch gekennzeichnet, dass** die zumindest eine Erfassungseinrichtung (14) dazu konfiguriert ist, während eines Betriebs eines Schienenfahrzeugs (3) Betriebsdaten des Schienenfahrzeugs (3), welche zumindest kinematische Daten des Schienenfahrzeugs (3) umfassen, zu erfassen und wobei die zumindest eine Recheneinrichtung (12) dazu konfiguriert ist, Belastungsdaten betreffend zumindest eine erste Komponente (1) des Schienenfahrzeugs (3), welche zumindest von einem kinematischen Zustand des Schienenfahrzeugs (3) abhängig sind, zumindest einem von dem Schienenfahrzeug (3) benutzbaren ersten Streckenabschnitt (13), welcher in der zumindest einen Recheneinrichtung (12) über Streckendaten erfasst ist, zuzuordnen, die Betriebsdaten und die Belastungsdaten einander streckenabschnittsspezifisch zuzuordnen und aus den Betriebsdaten, den Belastungsdaten und den Streckendaten zumindest einen Abnutzungszustand der zumindest ersten Komponente (1), zumindest einen Schädigungszustand der zumindest ersten Komponente (1) und/oder eine Lebensdauer der zumindest ersten Komponente (1) zu ermitteln.
